# EUROPEAN PATENT APPLICATION

(11) **EP 3 726 398 A1**
(43) Date of publication of application: **21.10.2020**
(21) Application number: 20170032.5
(22) Date of filing: 17.04.2020
(51) Int. Cl.: G06F 16/901

(54) **QUERYING A GRAPH DATABASE**

(30) Priority: 18.04.2019 GB 201905495
(71) Applicant: Data Chemist Limited, D07 X2VO Dublin 7 (IE)
(72) Inventor: MENDEL-GLEASON, Gavin, Dublin 7, D07 X2V0 (IE)
(74) Representative: Abel & Imray

(57) **Abstract**

A method (200) for querying a graph database (320) is provided. The graph database includes a plurality of nodes connected by edges, the edges indicating relationships between nodes in the plurality of nodes. The method comprises receiving a database query (310) describing a graph database pattern, wherein the database query is expressed using a modal logic query language that includes at least one fixed-point operator. The graph database is searched using the database query. In response to the searching, at least one Kripke structure (330) is obtained, each of the at least one Kripke structure representing a fragment of the graph database that corresponds to the graph database pattern. The method further comprises outputting data, based on the at least one Kripke structure, to provide a response to the database query.

## Description

### Technical Field

The present disclosure relates to querying a graph database.

### Background

Graph databases use graph structures to semantically represent, store and interpret data. Unlike relational databases, graph databases can explicitly represent dependencies between nodes of data, and can therefore allow for more complex hierarchical relationship structures to be more readily retrieved. Storing relationships within the graph database allows such relationships to be queried and retrieved relatively quickly compared to using relational databases. Further, graph databases allow for potentially complex relationships between inter-connected nodes to be visualised intuitively.

Query languages are languages that can facilitate the determination of patterns in a database. In a graph database, such patterns comprise graph fragments, or combinations of graph fragments, that may be expected to exist in the graph database. In some cases, the expected patterns are recursive (i.e. repeated in some way). Some known query languages are unable to represent such recursive patterns (and thus cannot result in recursive relationships being extracted and/or interpreted). Some other query languages can only represent relatively simple recursive functions, which may be inadequate when working with potentially large volumes of complex, inter-connected data. Further, some known query languages are relatively complex and thus not easy to use, particularly for an end user. For example, some known query languages are imperative languages. Such imperative languages may require a user to possess a relatively detailed programming and/or technical knowledge (e.g. knowledge of the specific control flow of the querying process) in order to generate valid queries.

It is therefore desirable to provide improved methods for querying graph databases.

### Summary

According to a first aspect, there is provided a method for querying a graph database, the graph database including a plurality of nodes connected by edges, the edges indicating relationships between nodes in the plurality of nodes, the method comprising: receiving a database query describing a graph database pattern, wherein the database query is expressed using a modal logic query language that includes at least one fixed-point operator; searching the graph database using the database query; in response to the searching, obtaining at least one Kripke structure, each of the at least one Kripke structure representing a fragment of the graph database that corresponds to the graph database pattern; and outputting data, based on the at least one Kripke structure, to provide a response to the database query.

The method of the first aspect enables a graph database to be queried flexibly and reliably, and in a user-friendly manner. The use of a modal logic query language that includes at least one fixed-point operator enables repeated patterns in the graph database to be described and retrieved from the graph database. Such repeated patterns may not be representable by some known query languages that do not include the at least one fixed-point operator, but are representable in the query language according to the first aspect. As such, queries expressed using the modal logic query language that includes the at least one fixed-point operator may be more flexible and/or diverse than queries expressed using other languages. This in turn may allow a greater variety of query responses to be returned to the user, thereby increasing an amount (and diversity) of meaningful and/or useful information that is extractable from the graph database.

Moreover, by interpreting the graph database using Kripke structures to respond to queries, the modal logic query language is endowed with Kripke semantics. Kripke semantics is a formal semantics for non-classical logic systems. A Kripke structure is a variation of a transition system, and comprises a graph whose nodes represent reachable states of the system and whose edges represent state transitions. The use of fixed-point operators with Kripke semantics allows recursive queries for a graph database to be expressed, processed and answered, thereby providing a more versatile graph database querying system.

Further, the method of the first aspect enables large graphs to be queried for sub-graphs which are of interest to the user. The obtained Kripke structure itself is an example of such a sub-graph. Such sub-graphs may contain complex structure, including cycles and/or recurring patterns, as will be described in more detail below. Such sub-graphs may be returned to the user directly, e.g. for visualisation and/or manipulation as a graph structure.

The application of modal calculus operators to query graph databases provides a more sophisticated and versatile mechanism for graph manipulation and/or constraint management compared to a querying system that does not use operators based on modal calculus. Such a mechanism is improved further by the use of the Kripke structure (i.e. the graph fragment) as the proof of satisfaction of a given query.

According to a second aspect, there is provided a computer program comprising a set of instructions which, when executed by a computerised device, cause the computerised device to perform a method for querying a graph database, the graph database including a plurality of nodes connected by edges, the edges indicating relationships between nodes in the plurality of nodes, the method comprising: receiving a database query describing a graph database pattern, wherein the database query is expressed using a modal logic query language that includes at least one fixed-point operator; searching the graph database using the database query; in response to the searching, obtaining at least one Kripke structure, each of the at least one Kripke structure representing a fragment of the graph database that corresponds to the graph database pattern; and outputting data, based on the at least one Kripke structure, to provide a response to the database query.

According to a third aspect, there is provided an apparatus comprising a processor and at least one memory having computer readable instructions stored thereon which, when executed by the processor, cause the processor to perform a method for querying a graph database, the graph database including a plurality of nodes connected by edges, the edges indicating relationships between nodes in the plurality of nodes, the method comprising: receiving a database query describing a graph database pattern, wherein the database query is expressed using a modal logic query language that includes at least one fixed-point operator; searching the graph database using the database query; in response to the searching, obtaining at least one Kripke structure, each of the at least one Kripke structure representing a fragment of the graph database that corresponds to the graph database pattern; and outputting data, based on the at least one Kripke structure, to provide a response to the database query.

It should be appreciated that features described in relation to one aspect of the present disclosure may be incorporated into other aspects of the present disclosure. For example, a method aspect may incorporate any of the features described with reference to an apparatus aspect and *vice versa.*

### Description of the Drawings

Embodiments of the present disclosure will now be described by way of example only with reference to the accompanying schematic drawings of which:
Figure 1 shows a schematic view of a graph database querying system according to embodiments of the present disclosure;
Figure 2 shows a flow chart depicting a method of querying a graph database according to embodiments of the present disclosure;
Figure 3 shows schematically a graph database querying process according to embodiments of the present disclosure;
Figures 4A to 4C show fragments of a graph database according to embodiments of the present disclosure;
Figures 5A to 5C show fragments of a graph database according to embodiments of the present disclosure;
Figure 6 shows a graph database according to embodiments of the present disclosure; and
Figure 7 shows schematically an apparatus according to embodiments of the present disclosure.

### Detailed Description

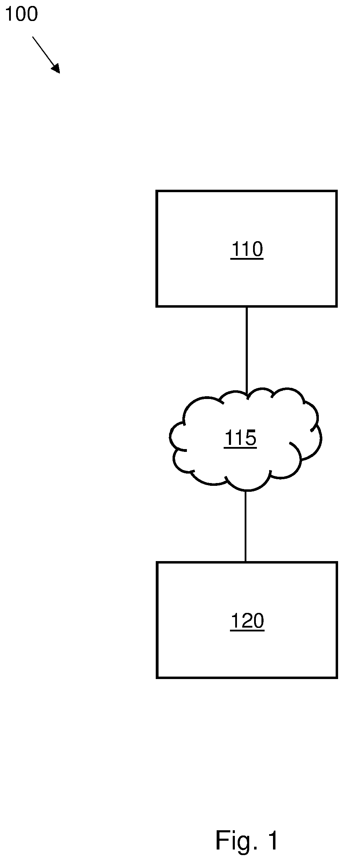

Referring to Figure 1, there is shown an example of a graph database querying system 100. The graph database querying system 100 is used to query a graph database, as will be described in more detail below. The system 100 includes a server apparatus 110 and a client apparatus 120. The system 100 may include at least one additional apparatus (not shown). The server apparatus 110 and/or client apparatus 120 may comprise one or more components. The one or more components may be implemented in hardware and/or software. The one or more components may be co-located or may be located remotely from each other in the system 100. Examples of types of apparatus include, but are not limited to, computerised devices, handheld or laptop computers, tablets, mobile devices, server devices and distributed computing equipment. The server apparatus 110 and/or the client apparatus 120 may be embodied as one or more software functions and/or hardware modules.

The server apparatus 110 is communicatively coupled to the client apparatus 120 via a data communications network 115. Examples of the data communications network 115 include, but are not limited to, the Internet, a Local Area Network (LAN) and a Wide Area Network (WAN). The server apparatus and/or the client apparatus 110, 120 may have a wired and/or wireless connection to the data communications network 115.

In embodiments of the present disclosure, the server apparatus 110 and/or the client apparatus 120 is configured to query a graph database (not shown), as will be described in more detail below. Briefly, a graph database includes a plurality of nodes connected by edges. The nodes can represent entities, instances, items or suchlike. The edges indicate relationships between nodes in the plurality of nodes. The edges may be directed or undirected. The graph database can also include properties which indicate information relating to one or more nodes and/or edges. A graph database uses one or more graph structures (comprising nodes, edges and/or properties) to represent and store data. Relationship data, namely data pertaining to relationships between nodes, can be stored, queried, modified and/or retrieved through use of the graph database.

In embodiments, the graph database is stored on the server apparatus 110. In alternative embodiments, the graph database is stored on one or more other entities. For example, the graph database may be partitioned and different partitions may be stored on one or more different entities. The server apparatus 110 may be configured to query the graph database in such alternative embodiments by transmitting and/or receiving data via one or more data communications networks, e.g. network 115. The graph database may be stored using a non-relational storage engine or a relational storage engine.

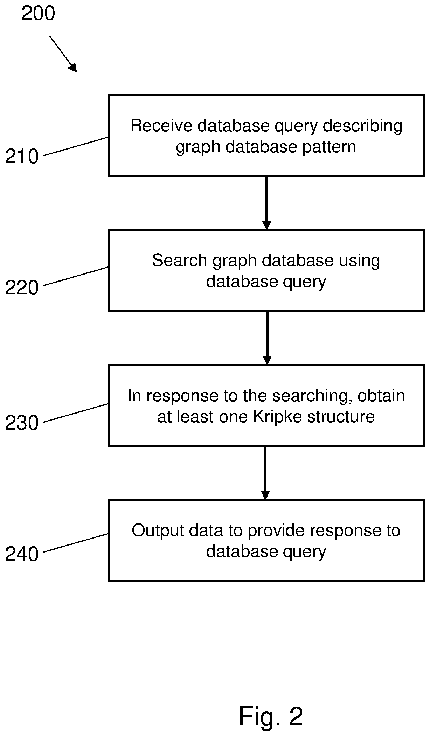

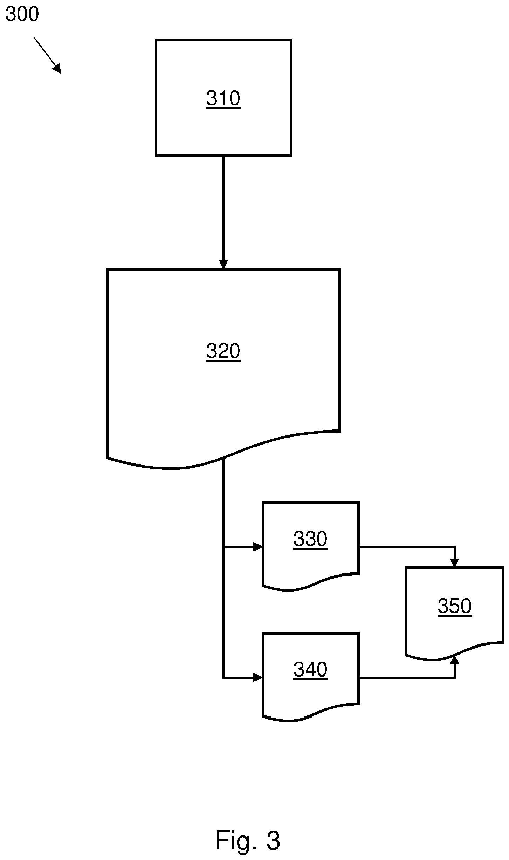

Referring to Figure 2, there is shown a method 200 of querying a graph database according to embodiments of the present disclosure. The method 200 may be performed by an apparatus such as the server apparatus 110 or the client apparatus 120 described above. A schematic representation of the querying process 300 is shown in Figure 3.

At item 210 of the method 200, a database query 310 is received. In embodiments, for example where the method 200 is performed by the server apparatus 110, the database query 310 is received from the client apparatus 120 via the network 115. In alternative embodiments, the database query 310 is not received from the client apparatus 120 via the network 115.

In embodiments, the database query 310 is user-defined. For example, the database query 310 may be received via user input at a graphical user interface. The user input may comprise one or more of text input, graphics, a selection of one or more predetermined objects or items, voice input, etc. In some examples, the database query 310 is received via a user interface at the client apparatus 120, before being sent via the network 115 to the server apparatus 110 for processing.

The database query 310 describes a graph database pattern. The graph database pattern is potentially present in the graph database 320 that is being queried. That is, the graph database pattern may be present in the graph database 320 that is being queried, or may be absent in the graph database 320. The graph database pattern may be expected to be found in the graph database 320. The graph database pattern may represent a path (or a possible path) through a part of the graph database 320. The graph database pattern may represent one or more nodes, edges, properties and/or relationships between nodes in the graph database 320. In embodiments, the graph database pattern described in the database query 310 corresponds to a shape of a particular sub-structure that is potentially present in the graph database 320.

In embodiments, the database query 310 comprises a recursive function. A recursive function may also be referred to as a recursive clause. Such a recursive function comprises a function which calls or references itself. The recursive function may use direct recursion (in which the function calls itself directly) or indirect recursion (in which the function calls another function which calls, either directly or indirectly, the first function). Through use of the recursive function, the database query 310 may be configured to search the graph database 320 recursively. The use of the recursive function may be considered to make the query itself recursive. In embodiments, the database query 310 describes a recursive and/or repeated pattern in the graph database 320. The database query 310 may describe one or more recursive relationships in the graph database 320. For example, to extract from a graph database the family tree of an individual, it is desirable for a query to describe a recursive pattern: an *ancestor* is anyone who is a parent, or is an *ancestor* of a parent. *Ancestor* in this case is an example of a recursive function, as will be described further below.

The database query 310 is expressed using a modal logic query language. The modal logic query language is a query language that incorporates and/or utilizes modal logic features. As such, the database query 310 comprises a statement or specification expressed using modal logic. In embodiments, the modal logic query language comprises a query language that uses one or more operators from modal µ-calculus. In embodiments, the modal logic query language uses Kripke semantics. The modal logic query language may be based on a fixed-point logic, i.e. an extension of first-order predicate logic with operators defining fixed-points.

The modal logic query language includes at least one fixed-point operator. In general, a fixed-point operator corresponds to a fixed-point of a function whose domain and range coincide. A given fixed-point may be derived by finding an element of the domain which corresponds with an element of the range under application of the function. For example, for a function *f* acting on the power set of a given set, the function *f* has a fixed-point if there is a set *X* such that *fX*≡*X.* If the function *f* is monotonic, there are two unique fixed-points for the function *f* A function is monotonic if any two sets which are subsets in the domain correspond with subsets of the range under application of *f.*

In embodiments, the modal logic query language includes a greatest fixed-point operator, *v*, and/or a least fixed-point operator, *µ*. *v* corresponds to a greatest fixed-point of a monotonic function, and *µ* corresponds to a least fixed-point of the monotonic function. *v* and *µ* are useable to express different types of recursive pattern for querying the graph database. The greatest fixed-point operator, *v*, and the least fixed-point operator, *µ*, will be understood in the context of modal *µ*-calculus. However, the use of *v* and *µ* as operators in a query language for querying graph databases, according to embodiments of the present disclosure, enhances the capability and versatility of a graph database querying system in handling a variety of different query types and/or graph patterns. In particular, including *v* and *µ* in the query language enables recursive queries to be expressed in an efficient and flexible manner, resulting in a more flexible and user-friendly database querying system.

In embodiments, the database query 310 comprises the at least one fixed-point operator. For example, the database query 310 may comprise one or both of *v* and *µ*. Which one of the fixed-point operators, *v* and *µ*, is used in the database query 310 can affect the end result that is returned to the user. However, the use of each of *v* and *µ* can provide the user with useful (and different) information pertaining to graph patterns in the graph database 320. Therefore, providing both *v* and *µ* as available operators for use in database queries expands and diversifies the useful information that can be extracted from the graph database 320, e.g. for data analysis or modification purposes.

In embodiments, the modal logic query language is a declarative language. That is, the modal logic query language is a non-imperative language in such embodiments. As such, the database query 310 may specify a desired result or output, rather than an explicit list of steps or commands indicating how such a result is to be arrived at. Using a declarative query language is more user-friendly and/or efficient than an imperative language. In particular, using a declarative query language may require less programming knowledge and/or less knowledge of the control flow of the querying process compared to a case in which an imperative query language is used. As such, the declarative modal logic query language is more readily useable for the end user, as well as being versatile and flexible with regard to the type and variety of queries that can be processed.

In embodiments, the at least one fixed-point operator in the modal logic query language comprises two fixed-point operators. In such embodiments, the database query 310 comprises a selected one of the two fixed-point operators. In embodiments, the selected one of the two fixed-point operators is selected based on user input. For example, where the two fixed-point operators comprise *v* and *µ*, one of *v* and *µ* may be selected for use in the database query 310. A user may specify which of *v* and *µ* is to be used by selecting a corresponding icon on a display, by typing the name of the desired fixed-point operator, etc. In alternative embodiments, one of the two fixed-point operators may be machine-selected. The at least one fixed-point operator in the modal logic query language may comprise more or fewer than two fixed-point operators in alternative embodiments.

In embodiments, the database query 310 is checked syntactically. The database query 310 may be checked to ensure that the query 310 is meaningful and consistent with the modal logic query language. If it is determined that the syntax of the query 310 is not consistent with the modal logic query language, an error message may be generated, for example. If it is determined that the syntax of the query 310 is consistent with the modal logic query language, processing of the query 310 is allowed to proceed.

At item 220, the graph database 320 is searched using the database query 310. Searching the graph database 320 is performed on the basis of the graph database pattern described in the database query 310.

In embodiments, searching the graph database 320 comprises processing the database query 310 by an evaluator function. The evaluator function evaluates the logical statement contained in the query 310. This may be performed by decomposing the logical statement into one or more constituent operators and/or functions. Logical statements may comprise operators from Boolean logic, including 'and', 'or', 'not' and 'xor'. Some logical statements may relate nodes via a logical description of edges. This leads to a relation which identifies nodes at which the decomposed logical statements may be described. The logical statements may also comprise at least one fixed-point operator, which enables consistent logical satisfaction of sub-graphs which may contain cycles.

In embodiments in which the database query 310 comprises a fixed-point operator, searching the graph database is 320 performed on the basis of that fixed-point operator. In embodiments, the at least one fixed-point operator comprises a plurality of fixed-point operators, each of the plurality of fixed-point operators being indicative of a different fixed-point of a monotonic function, the database query 310 comprising a given one of the plurality of fixed-point operators. In such embodiments, searching the graph database 320 comprises applying the monotonic function to at least one node of the plurality of nodes in the graph database 320 in accordance with a fixed-point of the monotonic function that corresponds to the given one of the fixed-point operators that is comprised in the database query 310. For example, if the database query 310 specifies the least fixed-point operator, *µ*, searching the graph database 320 involves applying the monotonic function across nodes in the graph database 320 in accordance with the least fixed-point of the function. The monotonic function may correspond to a function comprised in the database query 310, e.g. a recursive function. The monotonic function is user-defined, according to embodiments. In alternative embodiments, the monotonic function is machine-defined.

At item 230, in response to the searching, at least one Kripke structure 330 is obtained. The Kripke structure 330 represents a fragment of the graph database 320 that corresponds to the graph database pattern described by the database query 310. The Kripke structure 330 may comprise a subset of the nodes and/or edges of the graph database 320. As such, processing the query 310 may involve selecting nodes and/or edges from the graph database 320 for satisfaction of the logical statement contained in the query 310. In embodiments, a set of nodes is first selected, those nodes satisfying the logical statement of the query 310. As the nodes are accessible via edges, relations are formed which use those edges to connect nodes in the selected set of nodes to one another. The set of nodes and the edges are then recorded into a new graph (namely the Kripke structure 330). The Kripke structure 330 acts as a realiser (i.e. proof of truth) of the logical statements in the database query 310. In other words, the mechanism for deciding whether or not the logical statements of the query 310 are true is by obtaining a model (i.e. a Kripke structure) which demonstrates the satisfaction of Kripke semantics corresponding to the logical statements of the query 310.

In embodiments, the Kripke structure 330 comprises a pointed subgraph. The pointed subgraph satisfies the logical specification of the database query 310. The pointed subgraph may have a privileged node, also known as a "root" node. In such embodiments, the privileged node is comprised in the plurality of nodes of the graph database 320. In other words, a given node from the graph database 320 may be selected to be the privileged node, e.g. based on the database query 310 having specified that node, and a pointed graph originating from that node may be derived.

In embodiments, the Kripke structure 330 at least partially matches the graph database pattern described by the database query 310. For example, the Kripke structure 330 may include the graph database pattern, or a pattern from the graph database 320 that is determined to be sufficiently similar to the graph database pattern described by the query 310 (e.g. based on a comparison to a similarity threshold). The Kripke structure 330 may, in some embodiments, include additional data, nodes, edges and/or properties that do not match the graph database pattern of the query 310. In alternative embodiments, the Kripke structure 330 matches the graph database pattern described by the database query 310. For example, the Kripke structure 330 may include solely the graph data pattern described by the database query 310.

In embodiments, in response to the database query 310 comprising the greatest fixed-point operator, v, one or more nodes and/or one or more edges are discarded from an initial set of nodes and/or edges to obtain the at least one Kripke structure 330. In embodiments, such an initial set comprises the complete set of nodes and/or edges that form the graph database 320. The initial set is iteratively reduced until it no longer changes. In alternative embodiments, the initial set comprises a subset of the nodes and/or edges that form the graph database 320. Such a subset may comprise a maximum feasible set of nodes and/or edges from the graph database 320, or a pre-selected set of nodes and/or edges, for example.

In response to the database query 310 comprising the least fixed-point operator, *µ*, one or more nodes and/or one or more edges are added to an initial set of nodes and/or edges to obtain the at least one Kripke structure 330 in accordance with embodiments of the present disclosure. In embodiments, such an initial set comprises an empty set of nodes and/or edges. The initial set is iteratively expanded until it no longer changes. In alternative embodiments, the initial set comprises a non-empty set of nodes and/or edges from the graph database 320.

In embodiments, the graph database 320 comprises a cycle. A cycle is a path from a given node back to itself (optionally via one or more other nodes). A cycle may also be referred to as a "circularity" or "loop". In response to the database query 310 comprising the greatest fixed-point operator, v, the cycle is included in the Kripke structure 330. In response to the database query 310 comprising the least fixed-point operator, *µ*, the cycle is excluded from the Kripke structure 330. As such, Kripke structures obtained through use of v are configured to include cycles, whereas Kripke structures obtained through use of *µ* are configured to exclude cycles. For example, v may be used to positively identify and return cycles in the graph database 320, whereas *µ* may be used to ignore, or "step over" cycles in the graph database 320. A Kripke structure obtained through use of *µ* may comprise a linear, terminating path from one node to another node, whereas a Kripke structure obtained through use of v may comprise a non-terminating, "infinite" path containing one or more loops. Therefore, providing both v and *µ* as available operators in the query language enables a user to perform different types of query to find and/or extract different types of graph patterns from the graph database 320.

At item 240, data is outputted based on the Kripke structure 330. Such data is outputted to provide a response to the database query 310. In embodiments, for example where the method 200 is performed by the server apparatus 110, the data is outputted for transmission back to the client apparatus 120 via the network 115. In alternative embodiments, the data outputted is not transmitted to the client apparatus 120 via the network 115.

In embodiments, the data outputted comprises the at least one Kripke structure 330. In other words, a graph fragment may be returned as part of the response to the query. Such a graph fragment is a fragment of the graph database 320, corresponding to the graph pattern described in the query 310. The data outputted can thus comprise a graph structure, rather than mere data values or a tabulated structure. The data outputted is thus more suitable for visualisation and/or interpretation by a user compared to a case in which the data outputted does not comprise a graph structure. The graph fragment may be returned as a proof of satisfaction or evidence of the truth value of a given query.

In embodiments, a predetermined function is applied to the Kripke structure 330 to derive auxiliary data. The predetermined function may be a monotonic function. Any monotonic function of the Kripke structure 330 may supply an auxiliary value. This can be used to calculate new data from the entire region examined by the query 310. The auxiliary data may be outputted. For example, the auxiliary data may be outputted with the Kripke structure 310.

In embodiments, a plurality of Kripke structures 330, 340 are obtained in response to searching the graph database 320. Each of the plurality of Kripke structures 330, 340 corresponds to the graph database pattern described by the database query 310. In embodiments, the plurality of Kripke structures 330, 340 are aggregated into an aggregated Kripke structure 350. In such cases, the data outputted may comprise the aggregated Kripke structure 350. In other words, the data outputted as a response to the query 310 may comprise an aggregated Kripke structure 350 formed from multiple individual Kripke structures 330, 340 each satisfying the logic of the query 310. The aggregated Kripke structure 350 may be generated by performing a union operation across the plurality of Kripke structures 330, 340. The aggregated Kripke structure 350 may comprise at least one cycle. For example, each of the individual Kripke structures 330, 340 may include a cycle, in which case the aggregated structure 350 would comprise all of the cycles from the set of individual Kripke structures 330, 340. Aggregating the Kripke structures 330, 340 may yield additional information not readily apparent, or in some cases not even present, in the original graph database 320, e.g. in paths between different sub-structures. Such information may be useful for analysis and/or interpretation by a user.

In alternative embodiments, the plurality of Kripke structures 330, 340 are not aggregated. In such cases, the plurality of Kripke structures 330, 340 may be outputted as a sequence of separate structures, or a single Kripke structure 330 from the plurality of Kripke structures 330, 340 may be outputted. In embodiments in which a sequence of separate Kripke structures 330, 340 is outputted, the Kripke structures 330, 340 can be interpreted as a collection of "objects" from the graph database 320 each of which conforms to the "shape" defined in the query 310. Therefore, a query that asks for every instance of a given relationship in the graph database 320 can be answered with a collection of separate Kripke structures 330, 340 each of which includes an instance of the relationship, or an aggregated Kripke structure 350 which contains every instance of the relationship.

The results of the database query 310 can be used to determine whether the graph database 320 conforms to a predetermined set of constraints, properties and/or patterns. Such constraints, properties and/or patterns may be required by a user to maintain consistency for graph databases which are designed to meet a particular specification, structure and/or layout, for example. Additionally or alternatively, the results of the database query 310 can be used to obtain sub-graphs 330, 340 and/or the results of functions over those sub-graphs 330, 340 , for visualisation, further analysis, processing, manipulation, modification, etc. Such sub-graphs 330, 340 may reveal more information, and/or be easier to interpret, compared to the overall graph database 320, particularly in cases where the overall graph database 320 is relatively large and/or complex. Producing sub-graphs 330, 340 (i.e. Kripke structures) from the graph database 320 which correspond to a pattern specified in the query 310 thus enables relevant information which is of interest to the user to be extracted and de-coupled from data which does not correspond to the graph database pattern (and is therefore not of interest to the user). This enables the graph database 320 itself to be more user-friendly and/or versatile.

A formal description of modal logic querying according to embodiments of the present disclosure will now be given.

A graph G is a tuple (U, N, E), with a set of nodes N drawn from a universe U (i.e. N ⊆ U). Edges are a set E whose elements are pairs, (Node, Node), drawn from UxU (the Cartesian product of the universe U, E ⊆ UxU), or triples in the case of labelled edges, drawn from UxUxU (i.e. E ⊆ UxUxU) whose elements are (Node, Edge, Node).

The modal logics may be any of a family which includes the modal µ-calculus and which have the following properties, with L being the language. It is assumed that A, B, C ∈ L, meaning that terms described with A, B and C are drawn from L. L is defined recursively using the following: conjunctions (A ∧ B), disjunctions (A ∨ B), negations (A ¬ B) and implications (A → B). In addition, relations between nodes are formed. In principle, any relation which relates nodes, and which could be parameterised by nodes and/or edges, is possible.

Additionally, <e>A is defined as the following: there exists an edge, 'e', at the current node set, such that 'A' holds. Further, [a]A is defined as the following: for all nodes in the current node set that have nodes reachable by 'a', 'A' holds. This can be extended with a cardinality, [a(P)]A, such that for each node in the current node set, and all edges connected by 'a' to a set of nodes satisfying 'A', there are exactly 'n' nodes, and P(n) holds where 'P' is a predicate over the natural numbers.

The semantics used herein may be defined as the set of structures available from a logical formula under its interpretation. Given a statement A ∈ L, [[A]] denotes its interpretation. This interpretation may be constructed as a tuple of nodes and edges, a graph fragment, etc.

The greatest fixed-point operator is defined as vX.A[X], where 'X' is a parameter, enabling A[X] to be treated as a monotonic functor on sets of models. *ν*X.A[X] specifies that the interpretation of [[A]] is treated as a function of a parameter 'X', and the fixed-point of this function is found by operating on the entire feasible node set from the graph database. In other words, the greatest fixed-point solution is an iterative method of filtering formulae which satisfy 'A' such that cycles are automatically allowed.

Similarly, the least fixed-point operator is defined as *µ*X.A[X]. This is determined by building up from a monotonic function defined by [[A]] and applying it iteratively starting from an empty node set, and excluding cycles as and when they appear.

Specific examples of graph database queries performed according to embodiments of the present disclosure will now be described. It will be understood, however, that the methods presented herein are applicable to any suitable graph database.

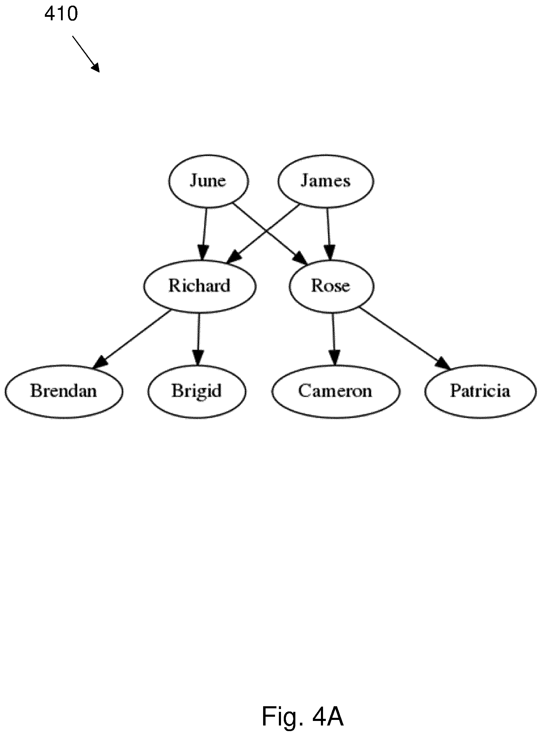

Figures 4A to 4C show first, second and third graph fragments 410, 420, 430 respectively according to embodiments. Each of the graph fragments 410, 420, 430 are obtained by querying a graph database corresponding to a family tree. In this example, the data in the graph database can be represented by the following: "June" -[Parent]-> "Richard"; "June" -[Parent]-> "Rose"; "James" -[Parent]-> "Richard"; "James" - [Parent]-> "Rose"; "Rose" -[Parent]-> "Cameron"; "Rose" -[Parent]-> "Patricia"; "Richard" -[Parent]-> "Brendan"; "Richard" -[Parent]-> "Brigid".

To query the graph database, a recursive function, Ancestor(X,Y) can be defined as follows: Ancestor(X,Y) := Parent(X,Y) OR (Parent(X,I) AND Ancestor(I,Y)).

Each of the graph fragments 410, 420, 430 comprises a Kripke structure.

The first graph fragment 410 depicted in Figure 4A corresponds to the result of a query that asks for all solutions having the relationship: v Ancestor(_,_). In other words, this query asks for every ancestry relationship in the family tree, regardless of any particular originating node. The first graph fragment 410 shown in Figure 4A represents the response to such a query, which depicts graphically all relationships that satisfy the logic of the query.

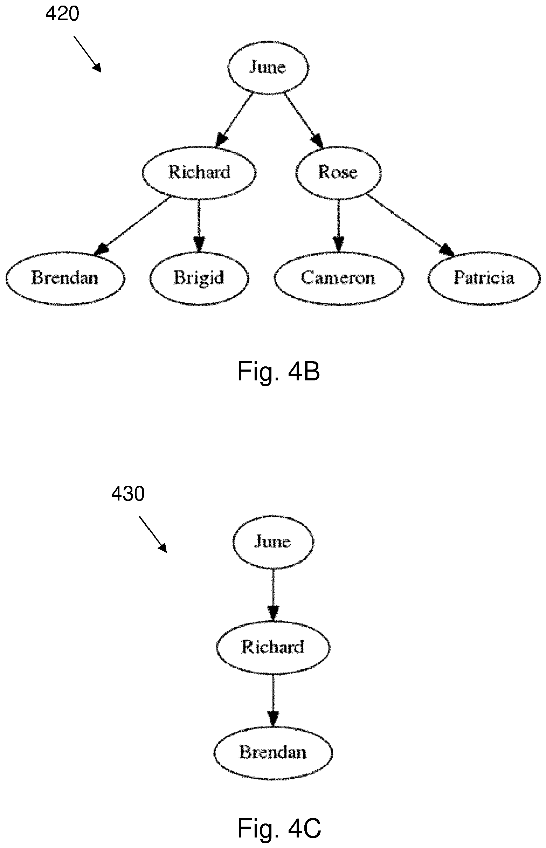

The second graph fragment 420 depicted in Figure 4B is obtained by using a different query to query the family tree graph database. The second graph fragment 420 corresponds to the result of a query that asks for all solutions having the relationship: v Ancestor(June,_). That is, this query asks for every ancestry relationship originating from June. June thus corresponds to a privileged node in the second graph fragment 420. The second graph fragment 420 represents the response to such a query, which depicts graphically all relationships which satisfy the logic of the query.

The third graph fragment 430 depicted in Figure 4C corresponds to the result of a query that asks for any solution having the relationship: *µ* Ancestor(June,_). This query asks for any relationship which satisfies the ancestry criterion originating from June. As can be seen from Figure 4C, the third graph fragment 430 is a linear path, terminating at a leaf (i.e. Brendan). Additional solutions satisfying this query may also be obtained, e.g. June -> Richard -> Brigid, resulting in a set of linear graph fragments, each corresponding to a path which satisfies the logic of the query. Such individual linear paths may be aggregated, e.g. through use of a union operation over the set of paths. The union operation may be specified in the query, for example.

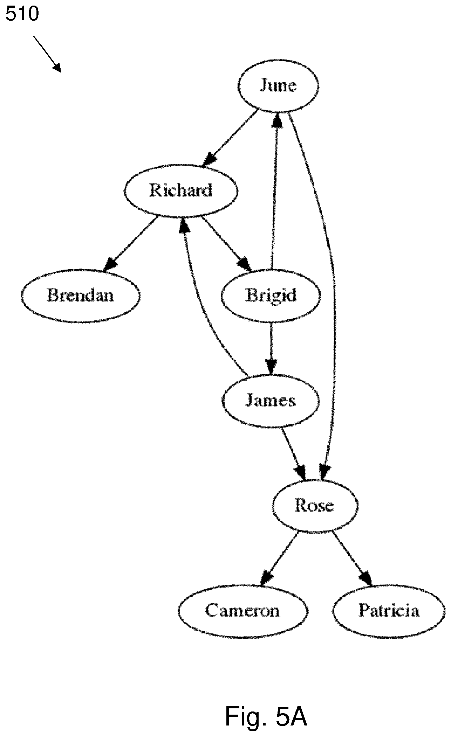

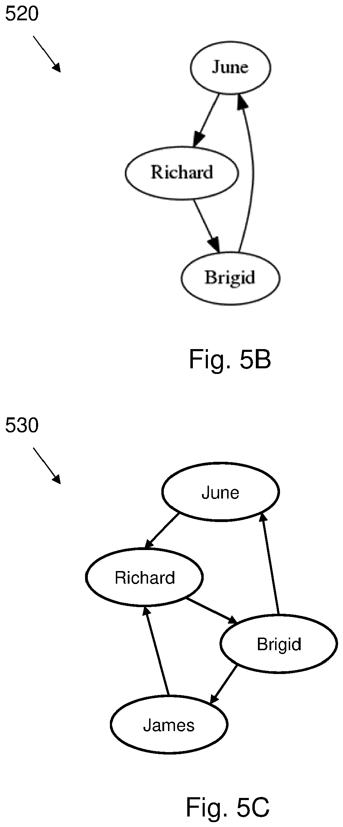

Figures 5A to 5C show first, second and third graph fragments 510, 520, 530 according to embodiments. In these embodiments, the graph database that is queried corresponds to a different family tree. In this example, the data in the graph database can be represented by the following: "June" -[Parent]-> "Richard"; "June" -[Parent]-> "Rose"; "James" -[Parent]-> "Richard"; "James" -[Parent]-> "Rose"; "Rose" -[Parent]-> "Cameron"; "Rose" -[Parent]-> "Patricia"; "Richard" -[Parent]-> "Brendan"; "Richard" -[Parent]-> "Brigid"; "Brigid" -[Parent]-> "James"; "Brigid" -[Parent]-> "June".

The first graph fragment 510 depicted in Figure 5A corresponds to the result of a declarative query that asks for all solutions having the relationship: v Ancestor(_,_). As can be seen in Figure 5A, the first graph fragment 510 shows that this family tree contains cycles (i.e. paths from a given node back to the same node). In this case, the cycles may be indicative of incorrect data entry, or other problems relating to the graph database.

The second graph fragment 520 depicted in Figure 4B corresponds to the result of a query that asks for any solution having the relationship: v Ancestor(X,X). This query seeks to find a cycle in the graph database (namely a cycle from any node X back to node X). As discussed above, using the greatest fixed-point operator, v, allows for cycles to be included in the resulting graph fragments. Therefore, the second graph fragment 520 identifies a cycle from June back to June.

The third graph fragment 530 depicted in Figure 4C corresponds to the result of a query that asks for all solutions having the relationship: v Ancestor(X,X). This query seeks to find every cycle in the graph database. The result is an aggregated graph structure comprising two cycles: a loop from June back to June, as identified in the second graph fragment 520, and a loop from James back to James. Therefore, all cycles in the graph database are identified and represented in the third graph fragment 530.

Since the least fixed-point operator, *µ*, does not allow for cycles, a query such as *µ* Ancestor(X,X) would not return a solution in this example, or would return an empty graph.

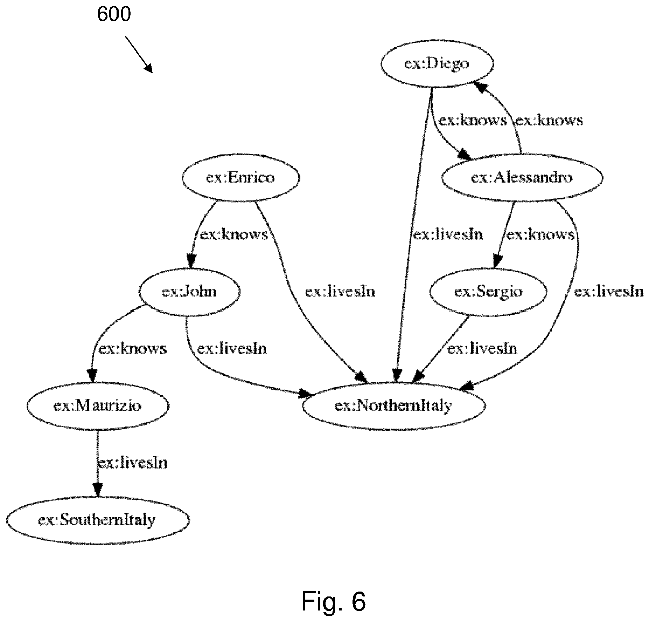

Figure 6 shows a graph database 600 according to embodiments. The data in the graph database 600 can be represented by the following: "ex:Enrico" -[ex:livesIn]-> "ex:NorthernItaly"; "ex:Diego" -[ex:livesIn]-> "ex:NorthernItaly"; "ex:Alessandro" -[ex:livesIn]-> "ex:NorthernItaly"; "ex:Sergio" -[ex:livesIn]-> "ex:NorthernItaly"; "ex:John" -[ex:livesIn]-> "ex:NorthernItaly"; "ex:Maurizio" -[ex:livesIn]-> "ex:SouthernItaly"; "ex:Enrico" -[ex:knows]-> "ex:John"; "ex:John" -[ex:knows]-> "ex:Maurizio"; "ex:Diego" -[ex:knows]-> "ex:Alessandro"; "ex:Alessandro" -[ex:knows]-> "ex:Diego"; "ex:Alessandro" -[ex:knows]-> "ex:Sergio".

The graph database 600 can be queried to find people ('NI') who live in Northern Italy and only know (directly or indirectly) other people who live in Northern Italy.

To query the graph database 600, a recursive function can be defined as follows: *NI* = (<ex:livesIn> is ex:NorthernItaly) AND ([ex:knows] *NI*).

When the greatest fixed-point operator, v, is used with this recursive function to query the graph database 600, the resulting graph fragment comprises ex:Alessandro, ex:Diego, and ex:Sergio. That is, these three individuals are determined to satisfy the *NI* relationship criterion specified in the query.

However, when the least fixed-point operator, *µ*, is used instead of v, the result will only include ex:Sergio. As such, two different outcomes can be obtained through use of the two fixed-point operators, and each outcome may provide useful information relating to the graph database.

The least fixed-point solution corresponds with the set of nodes which can be built up incrementally from a finite number of approximations each of which attempts to include additional nodes which have the required ex:knows and ex:livesIn links. This set will initially include ex:Sergio. However, since there is a cycle between ex:Diego and ex:Alessandro, and it is required that *all* those known to a given node themselves satisfy the *NI* relation, neither one of ex:Diego and ex:Alessandro can be included until the other is included. Therefore, the set of nodes does not expand beyond ex:Sergio. This corresponds with a liveness property. The least fixed-point properties are terminating properties in which self-similarity is built up finitely, and cannot therefore be circular (i.e. infinite).

In contrast, the greatest fixed-point solution begins with an initial set of nodes comprising every node from the graph database 600, and discards those nodes which fail to satisfy the *NI* relation. This approach assumes that a node is within a set until it has been excluded. Therefore cyclic patterns in the recursion are captured. This corresponds with a liveness property.

The method of least and greatest fixed-point operators clarifies a distinction between different interpretations of potential circularities in the graph model. These two interpretations can yield different constraints and accept different states. Therefore, delineating between a least fixed-point solution and a greatest fixed-point solution in the query language allows this difference to be made explicit, and allows a user to identify a particular set of constraints and states (associated with either the least or the greatest fixed-point solution), depending on what information the user wishes to find and/or extract from the graph database.

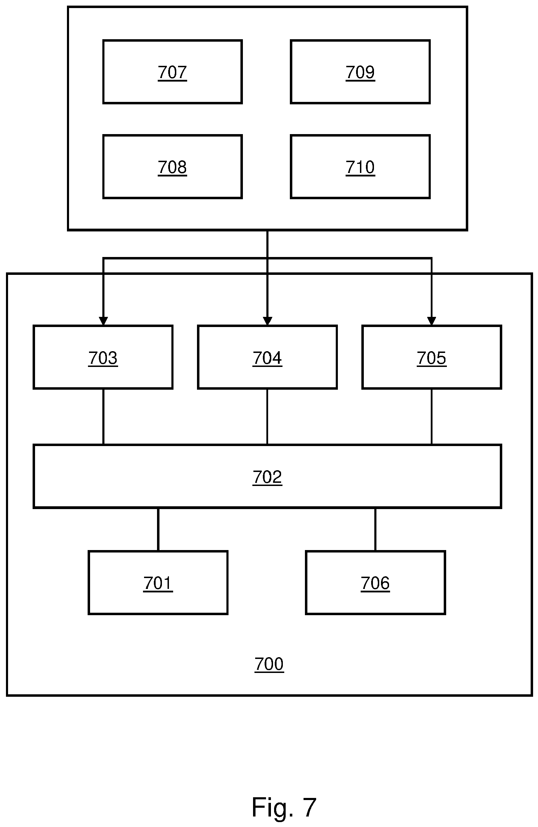

Referring to Figure 7, there is shown a schematic block diagram of an example of an apparatus 700. In embodiments, the apparatus 700 comprises a server. In alternative embodiments, the apparatus 700 comprises a client device.

Examples of apparatus 700 include, but are not limited to, a mobile computer, a personal computer system, a wireless device, base station, phone device, desktop computer, laptop, notebook, netbook computer, mainframe computer system, handheld computer, workstation, network computer, application server, storage device, a consumer electronics device, or in general any type of computing or electronic device.

In this example, the apparatus 700 comprises one or more processors 701 configured to process instructions and/or data. The one or more processors 701 may comprise a central processing unit (CPU). The one or more processors 701 are coupled with a bus 702. The one or more processors 701 may comprise multiple co-located processors or multiple disparately located processors. Operations performed by the one or more processors 701 may be carried out by hardware and/or software.

In this example, the apparatus 700 comprises at least one computer-useable volatile memory 703, at least one computer-useable non-volatile memory 704, and at least one data storage unit 705. The volatile memory 703, non-volatile memory 704 and/or data storage unit 705 are configured to store information and/or instructions for use by the one or more processors 701. The volatile memory 703, the non-volatile memory 704 and the data storage unit 705 are coupled with the bus 702. The volatile memory 703 may comprise random access memory (RAM). The non-volatile memory 704 may comprise read-only memory (ROM). The data storage unit 705 may comprise a magnetic or optical disk and disk drive or a solid-state drive (SSD).

In this example, the apparatus 700 comprises one or more input/output (I/O) devices 706 configured to communicate information to and/or from the one or more processors 701. The one or more I/O devices 706 are coupled with the bus 702. The one or more I/O devices 706 may comprise at least one network interface. The at least one network interface may enable the apparatus 700 to communicate via one or more data communications networks, e.g. the Internet. The one or more I/O devices 706 may comprise a user interface for receiving user input, for example.

Various other entities are depicted for the apparatus 700. For example, when present, an operating system 707, processing module 708, one or more further modules 709, and data 710 are shown as residing in one, or a combination, of the volatile memory 703, non-volatile memory 704 and the data storage unit 705. The processing module 708 may be implemented by way of computer program code stored in memory locations within the non-volatile memory 704, computer-readable storage media within the data storage unit 705 and/or other tangible computer-readable storage media. Examples of tangible computer-readable storage media include, but are not limited to, an optical medium (e.g., CD-ROM, DVD-ROM or Blu- ray), flash memory card, floppy or hard disk or any other medium capable of storing computer-readable instructions such as firmware or microcode in at least one ROM or RAM or Programmable ROM (PROM) chips or as an Application Specific Integrated Circuit (ASIC). The apparatus 700 may therefore comprise a processing module 708 which can be executed by the one or more processors 701. The processing module 708 can be configured to include instructions to implement at least some of the operations described in the present disclosure. During operation, the one or more processors 701 launch, run, execute, interpret or otherwise perform the instructions in the processing module 708.

Although at least some aspects of the examples described herein with reference to the drawings comprise computer processes performed in processing systems or processors, examples described herein also extend to computer programs, for example computer programs on or in a carrier, adapted for putting the examples into practice. The carrier may be any entity or device capable of carrying the program.

It will be appreciated that the apparatus 700 may comprise more, fewer and/or different components from those depicted in Figure 7.

The apparatus 700 may be located in a single location or may be distributed in multiple locations. Such locations may be local or remote.

The techniques described herein may be implemented in software or hardware, or may be implemented using a combination of software and hardware. They may include configuring an apparatus to carry out and/or support any or all of techniques described herein.

Whilst the present disclosure has been described and illustrated with reference to particular embodiments, it will be appreciated by those of ordinary skill in the art that the present disclosure lends itself to many different variations not specifically illustrated herein. By way of example only, certain possible variations will now be described.

In alternative embodiments of the present disclosure, the data outputted does not comprise the at least one Kripke structure 330 itself, but comprises data derived therefrom. For example, the data outputted may comprise one or more nodes, edges and/or sub-elements of such nodes and/or edges that satisfy a criterion corresponding to the database pattern described in the query 310. The data outputted may comprise sets of such nodes, edges and/or sub-elements. Alternatively, the data outputted may comprise one or more truth values.

In embodiments of the present disclosure, the graph database 320 is searched using the database query 310. In alternative embodiments, a selected portion of the graph database 320 is searched using the database query 310. The portion may be selected based on user input. For example, a user may select a portion of the graph database 320 to be interrogated, and then enter a query 310 for querying patterns in that portion. Additionally or alternatively, the database query 310 may indicate, or be useable to determine, the portion that is to be searched. In alternative embodiments, the portion is selected based on a preliminary selection process. Such a process may, for example, involve determining, for each of a set of portions of the graph database 320, a likelihood that the portion will contain a predetermined pattern. Portions that are determined to be relatively likely to contain the predetermined pattern may be searched instead of portions that are determined to be relatively unlikely to contain the predetermined pattern.

In embodiments of the present disclosure, the database query 310 is user-defined. In alternative embodiments, the database query 310 is machine-defined. For example, the database query 310 may be generated automatically in response to a predetermined trigger event. Such a trigger event may comprise an update of the graph database 320, generation of the graph database 320, an expiry of a predetermined time period, etc. The graph database querying system may be configured to run one or more predetermined queries in response to the graph database 320 being updated, e.g. with new data being added to the graph database 320. Such predetermined queries may check that the updated graph database conforms to a set of desired constraints and/or patterns. For example, it may be desired in a family tree graph database that no person can be their own ancestor. Running a query that identifies potential cycles (e.g. using the greatest fixed-point operator) would check that the graph database complies with such a restriction, and such a query can be re-run whenever new data is entered into the graph database. If such a query returns a result that indicates the presence of cycles, the most recent graph database update could be rejected and/or reversed, and/or an error message could be generated. Therefore, the integrity of the graph database can be maintained and/or increased.

In embodiments of the present disclosure, the query language is declarative. In alternative embodiments, the query language is not a declarative language. For example, the query language may be an imperative language in such alternative embodiments.

In alternative embodiments, the database query 310 does not itself comprise a fixed-point operator. In some such cases, the at least one fixed-point operator is still part of the modal logic query language in which the query 310 is expressed. In other words, the at least one fixed-point operator is available for use in database queries, by being part of the query language, even though some specific queries may not include a fixed-point operator.

In alternative embodiments, the graph database 320 does not comprise any cycles. Nevertheless, querying the graph database 320 using the fixed-point operators can be used to check for possible cycles, or to prevent cycles from being introduced to the graph database 320.

Where in the foregoing description, integers or elements are mentioned which have known, obvious or foreseeable equivalents, then such equivalents are herein incorporated as if individually set forth. It will also be appreciated that integers or features of the present disclosure that are described as preferable, advantageous, convenient or the like are optional and do not limit the scope of the independent claims. Moreover, it is to be understood that such optional integers or features, whilst of possible benefit in some embodiments, may not be desirable, and may therefore be absent, in other embodiments.

The features of any dependent claim may be combined with the features of any of the independent claims or other dependent claims. Features described in relation to one example or embodiment may be used in other described examples or embodiments, e.g. by applying relevant portions of that disclosure.

## Claims

1. A method for querying a graph database, the graph database including a plurality of nodes connected by edges, the edges indicating relationships between nodes in the plurality of nodes, the method comprising:
receiving a database query describing a graph database pattern, wherein the database query is expressed using a modal logic query language that includes at least one fixed-point operator;
searching the graph database using the database query;
in response to the searching, obtaining at least one Kripke structure, each of the at least one Kripke structure representing a fragment of the graph database that corresponds to the graph database pattern; and
outputting data, based on the at least one Kripke structure, to provide a response to the database query.

2. A method according to claim 1, wherein the database query comprises a recursive function.

3. A method according to claim 1 or claim 2, wherein the data outputted comprises the at least one Kripke structure.

4. A method according to any of claims 1 to 3, wherein the modal logic query language is a declarative language.

5. A method according to any of claims 1 to 4, wherein the database query comprises the at least one fixed-point operator.

6. A method according to any of claims 1 to 5,
wherein the at least one fixed-point operator comprises two fixed-point operators, and
wherein the database query comprises a selected one of the two fixed-point operators, the selected one of the two fixed-point operators having been selected based on user input.

7. A method according to any of claims 1 to 6, wherein the modal logic query language includes a greatest fixed-point operator, v, and/or a least fixed-point operator, *µ*.

8. A method according to claim 7,
wherein the method comprises, in response to the database query comprising the greatest fixed-point operator, v, discarding one or more nodes and/or one or more edges from a first set of nodes and/or edges to obtain the at least one Kripke structure, and
wherein the method comprises, in response to the database query comprising the least fixed-point operator, *µ*, adding one or more nodes and/or one or more edges to a second set of nodes and/or edges to obtain the at least one Kripke structure.

9. A method according to claim 7 or claim 8,
wherein the graph database comprises a cycle,
wherein the method comprises, in response to the database query comprising the greatest fixed-point operator, *v*, including the cycle in the at least one Kripke structure, and
wherein the method comprises, in response to the database query comprising the least fixed-point operator, *µ*, excluding the cycle from the at least one Kripke structure.

10. A method according to any of claims 1 to 9,
wherein the at least one fixed-point operator comprises a plurality of fixed-point operators,
wherein each of the plurality of fixed-point operators is indicative of a different fixed-point of a monotonic function,
wherein the database query comprises a given one of the plurality of fixed-point operators, and
wherein the searching the graph database comprises applying the monotonic function to at least one node of the plurality of nodes in the graph database in accordance with a fixed-point of the monotonic function that corresponds to the given one of the plurality of fixed-point operators.

11. A method according to any of claims 1 to 10, wherein the at least one Kripke structure comprises a plurality of Kripke structures that each correspond to the graph database pattern described by the database query,
wherein the method comprises aggregating the plurality of Kripke structures into an aggregated Kripke structure, wherein the data outputted comprises the aggregated Kripke structure, and
wherein the aggregated Kripke structure comprises at least one cycle.

12. A method according to any of claims 1 to 11, wherein each of the at least one Kripke structure comprises a pointed subgraph having a privileged node, the privileged node being comprised in the plurality of nodes of the graph database.

13. A method according to any of claims 1 to 12, wherein the database query is user-defined, and wherein the database query is received via user input at a graphical user interface.

14. A computer program comprising a set of instructions which, when executed by a computerised device, cause the computerised device to perform a method for querying a graph database, the graph database including a plurality of nodes connected by edges, the edges indicating relationships between nodes in the plurality of nodes, the method comprising:
receiving a database query describing a graph database pattern, wherein the database query is expressed using a modal logic query language that includes at least one fixed-point operator;
searching the graph database using the database query;
in response to the searching, obtaining at least one Kripke structure, each of the at least one Kripke structure representing a fragment of the graph database that corresponds to the graph database pattern; and
outputting data, based on the at least one Kripke structure, to provide a response to the database query.

15. Apparatus comprising:
a processor; and
at least one memory having computer readable instructions stored thereon which, when executed by the processor, cause the processor to perform a method for querying a graph database, the graph database including a plurality of nodes connected by edges, the edges indicating relationships between nodes in the plurality of nodes, the method comprising:
receiving a database query describing a graph database pattern, wherein the database query is expressed using a modal logic query language that includes at least one fixed-point operator;
searching the graph database using the database query;
in response to the searching, obtaining at least one Kripke structure, each of the at least one Kripke structure representing a fragment of the graph database that corresponds to the graph database pattern; and
outputting data, based on the at least one Kripke structure, to provide a response to the database query.
